(19) **Europäisches Patentamt / European Patent Office / Office européen des brevets**

(11) **EP 2 505 802 A2**

(12) # EUROPEAN PATENT APPLICATION

(43) Date of publication:
**03.10.2012 Bulletin 2012/40**

(51) Int Cl.:
**F01N 3/022** *(2006.01)*    **F01N 3/20** *(2006.01)*

(21) Application number: **11187074.7**

(22) Date of filing: **28.10.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **29.03.2011 PCT/JP2011/057854**

(71) Applicant: **Ibiden Co., Ltd.**
**Ogaki-shi**
**Gifu 503-8604 (JP)**

(72) Inventor: **Ogyu, Kazutake**
**Gifu, 501-0695 (JP)**

(74) Representative: **HOFFMANN EITLE**
**Patent- und Rechtsanwälte**
**Arabellastrasse 4**
**81925 München (DE)**

(54) **Exhaust gas conversion system and exhaust gas conversion method**

(57)    An exhaust gas conversion system includes an oxide catalyst, a filter, and a SCR (Selective Catalytic Reduction) catalyst that are sequentially arranged in a direction in which an exhaust gas flows in an exhaust path of a diesel engine and a part positioned between the oxide catalyst and the filter and configured to supply ammonia.

FIG.1

EP 2 505 802 A2

**Description**

<u>TECHNICAL FIELD</u>

The present invention relates to an exhaust gas conversion system and exhaust gas conversion method.

<u>BACKGROUND ART</u>

Conventionally, as one of the automotive exhaust gas converting systems, an SCR (Selective Catalytic Reduction) system has been known in which NOx is reduced to nitrogen and water by using ammonia.
In the SCR system, zeolite is known as a material for absorbing ammonia.
In Patent Document 1, an exhaust gas conversion apparatus is disclosed. The exhaust gas conversion apparatus in Patent Document 1, which includes an apparatus having an SCR catalyst for reducing NOx provided in a exhaust path of a diesel engine, a DOC (Diesel Oxidation Catalyst) and a DPF (Diesel Particulate Filter) serially provided in this order from an upstream side of the SCR catalyst, supplies and ejects ammonia from an exhaust path between the DPF and the SCR catalyst.

Prior Art Reference

Patent Document 1: Japanese Laid-Open Patent Publication No. 2000-303826

<u>DISCLOSURE OF THE INVENTION</u>

PROBLEM TO BE SOLVED BY INVENTION

However, with the conventional exhaust gas conversion apparatus, it is necessary to maintain a sufficient distance between the DPF and the SCR for diffusing ammonia in a radial direction (i.e. toward outer peripheral part) of the SCR catalyst, so that NOx contained in the exhaust gas can be sufficiently converted. Thus, there is a difficulty of being unable to reduce the space for positioning the exhaust gas conversion apparatus.
In view of the above-described difficulty, an embodiment of the present invention provides an exhaust gas conversion system and an exhaust gas conversion method that enable reduction of the space for positioning the exhaust gas conversion apparatus while maintaining NOx conversion efficiency.

MEANS FOR SOLVING PROBLEM

An embodiment of the present invention provides an exhaust gas conversion system includes an oxide catalyst, a filter, and a SCR (Selective Catalytic Reduction) catalyst that are sequentially arranged in a direction in which an exhaust gas flows in an exhaust path of a diesel engine and a part positioned between the oxide catalyst and the filter and configured to supply ammonia.
It is preferable that the filter is a honeycomb structural body including a honeycomb unit having a plurality of through holes divided by partition walls and arranged in a longitudinal direction thereof, wherein the plural through holes are sealed on one end of the honeycomb unit.
It is preferable that the honeycomb unit does not support a catalyst.
It is preferable that the honeycomb unit includes silicon carbide or silicon carbide bonded silicon.
It is preferable that the partition walls of the honeycomb unit have a thickness of 0.10 mm or more and 0.18 mm or less.
It is preferable that the SCR catalyst is a honeycomb structural body including a honeycomb unit having a plurality of through holes divided by partition walls and arranged in a longitudinal direction thereof, wherein the honeycomb unit includes zeolite and an inorganic binder.
It is preferable that the honeycomb unit includes one or more materials selected from a group of an inorganic fiber, a scale-like material, a tetrapod-shaped material, or a three-dimensional needle-shaped material.
It is preferable that the zeolite includes a phosphate group zeolite.
It is preferable that the filter and the SCR catalyst are installed in a metal container.
An embodiment of the present invention provides a method for converting exhaust gas characterized by including a step of: converting the exhaust gas by using the exhaust gas conversion system according to an embodiment of the present invention.

EFFECT OF INVENTION

According to an embodiment of the present invention, there can be provided an exhaust gas conversion system and an exhaust gas conversion method that enable reduction of the space for positioning the exhaust gas conversion apparatus while maintaining NOx conversion efficiency.

BRIEF DESCRIPTION OF THE DRAWINGS

Fig. 1 is a schematic diagram illustrating an example of an exhaust gas conversion system according to an embodiment of the present invention;
Fig. 2 is a perspective view illustrating an example of an SCR catalyst of Fig. 1;
Fig. 3 is a perspective view illustrating another example of the SCR catalyst of Fig. 1;
Fig. 4 is a perspective view illustrating a honeycomb unit constituting the SCR catalyst of Fig. 3; and
Fig. 5 is a schematic diagram illustrating other example of an exhaust gas conversion system according to an embodiment of the present invention.

DESCRIPTION OF EMBODIMENTS

In the following, embodiments of the present invention are described with reference to the accompanying drawings.

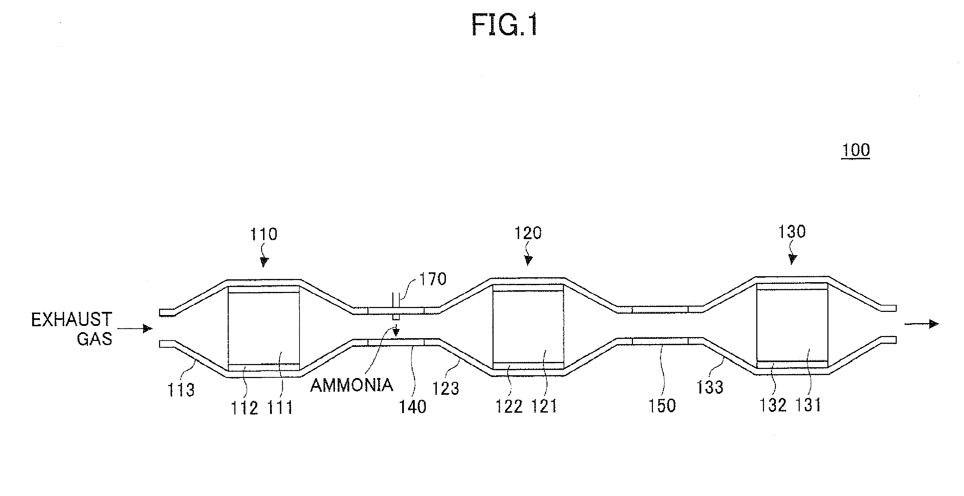

Fig. 1 illustrates an example of an exhaust gas conversion system according to an embodiment of the present invention. The exhaust gas conversion system 100 has exhaust gas conversion apparatuses 110, 120, and 130 that are connected via pipes 140 and 150. In this example, the exhaust gas conversion apparatus 110 can be manufactured by installing (e.g., canning) a DOC (Diesel Oxidation Catalyst) 111 in a metal container (shell) 113 in a state where a holding sealing member 112 is provided at an outer peripheral part of the DOC 111. Further, the exhaust gas conversion apparatus 120 can be manufactured by installing (e.g., canning) a DPF (Diesel Particulate Filter and also simply referred to as "filter") 121 in a metal container 123 in a state where a holding sealing member 122 is provided at an outer peripheral part of the DPF 121. Further, the exhaust gas conversion apparatus 130 can be manufactured by installing (e.g., canning) an SCR (Selective Catalytic Reduction) catalyst 131 in a metal container 133 in a state where a holding sealing member 132 is provided at an outer peripheral part of the SCR catalyst 131. Thereby, the exhaust gas conversion system 100 can convert the exhaust gas of a diesel engine.

Further, the exhaust gas conversion system 100 has an ammonia supply part 170 inside the pipe 140 provided between the exhaust gas conversion apparatus 110 and the exhaust gas conversion apparatus 120. The ammmonia supply part 170 is, for example, an injection nozzle for injecting ammonia or a compound that generates ammonia by being decomposed. By supplying ammonia into the pipe 140 with the ammonia supply part, the SCR catalyst 131 reduces NOx contained in an exhaust gas.

The compound that generates ammonia by being decomposed is not limited in particular as long as the compound can generate ammonia by being heated with exhaust gas inside the pipe 140. However, it is preferable for the compound to be urea water because urea water has satisfactory storage stability.

Thus, urea water generates ammonia by being heated with exhaust gas and being hydrolyzed inside the pipe 140.

In the exhaust gas conversion system 100, ammonia is supplied into the pipe 140. Therefore, ammonia can be dispersed in a radial direction (i.e. toward the outer peripheral part) of the SCR catalyst 131 without maintaining a sufficient distance between the DPF 121 and the SCR catalyst 131. As a result, the space for positioning the exhaust gas conversion apparatuses 120 and 130 can be reduced while maintaining NOx conversion efficiency. Alternatively, the exhaust gas conversion apparatus 120 and the exhaust gas conversion apparatus 130 may be directly connected to each other by omitting the pipe 150.

On the other hand, since ammonia is supplied into the pipe 150 in a case of an exhaust gas conversion system according to a related art example, it is necessary to maintain a distance between the DPF 121 and the SCR catalyst 131 and diffuse the ammonia in a radial direction (i.e. toward the outer peripheral part) of the SCR catalyst 131 in order to sufficiently convert NOx contained in the exhaust gas. As a result, the space between the exhaust gas conversion apparatus 120 and 130 cannot be reduced.

The DOC 111 is a honeycomb structural body including a honeycomb unit. The honeycomb unit of the DOC 111 supports a catalyst and has plural through holes divided by partition walls and arranged in a longitudinal direction thereof.

Although the material constituting the honeycomb unit of the DOC 111 is not limited in particular, the material may be cordierite or the like.

Although the catalyst carried by the honeycomb unit of the DOC 111 is not limited in particular, the catalyst may be platinum, palladium, rhodium, or the like. Two or more of them may be used together.

A catalyst support layer may be formed in the honeycomb unit of the DOC 111 for supporting the catalyst.

Although the material constituting the catalyst support layer of the honeycomb unit of the DOC 111 is not limited in particular, the material may be alumina or the like.

Although the holding sealing member 112, 122, 132 is not limited in particular, it is preferable for the holding sealing member 112, 122, 132 to be a mat including an inorganic fiber.

The DPF 121 is also a honeycomb structural body including a honeycomb unit. The honeycomb unit of the DPF 121 has plural through holes divided by partition walls and arranged in a longitudinal direction thereof. The through holes on one end of the honeycomb unit of the DPF 121 are sealed.

Although the material constituting the honeycomb unit of the DPF 121 is not limited in particular, the material may be silicon carbide (SiC), silicon carbide bonded silicon (SiSiC), cordierite, aluminum titanate, etc. However, because silicon carbide (SiC) or silicon carbide bonded silicon (SiSiC) can prevent cracks from being generated even where a large amount of soot remaining in the DPF 121 is burned, it is preferable to use silicon carbide (SiC) or silicon carbide bonded silicon (SiSiC).

The honeycomb unit of the DPF 121 does not support a catalyst such as platinum, palladium, rhodium, or the like. Thereby, the ammonia supplied into the pipe 140 can be prevented from oxidizing. Further, with the DPF 121 having a honeycomb unit that does not support a catalyst, temperature does not increase in correspondence with reactions of a catalyst. Therefore, the honeycomb unit of the DPF 121 can maintain strength even where the thickness of the partition walls of the honeycomb unit is reduced.

It is preferable for the partition wall of the honeycomb unit of the DPF 121 to have a thickness of 0.10 to 0.18 mm. In a case where the thickness of the partition wall of the honeycomb unit of the DPF 121 is less than 0.10 mm, the strength of the DPF 121 decreases. On the other hand, in a case where the thickness of the partition wall of the honeycomb unit of the DPF 121 is more than 0.18 mm, the pressure loss of the DPF 121 increases. As a result, the space for positioning the exhaust gas conversion apparatus 120 cannot be reduced.

The SCR catalyst 131 is also a honeycomb structural body including a honeycomb unit. The SCR catalyst 131 has plural through holes divided by partition walls and arranged in a longitudinal direction thereof.

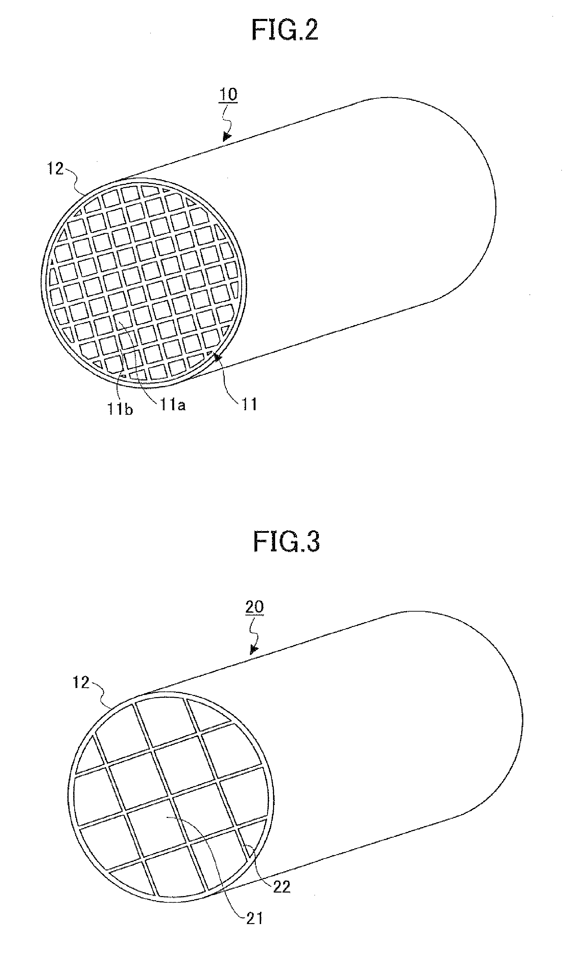

A honeycomb structural body 10 is illustrated as an example of the SCR catalyst 131 in Fig. 2. The honeycomb structural body 10 includes zeolite and an inorganic binder. The honeycomb structural body 10 has a single honeycomb unit 11 including plural through-holes 11a divided by partition walls 11b and arranged in a longitudinal direction thereof. Further, the honeycomb structural body 10 has an outer peripheral coating layer 12 formed on an outer peripheral surface of the honeycomb unit 11 except for both end faces of the honeycomb unit 11.

Although the zeolite included in the honeycomb unit 11 is not limited in particular, the zeolite may be β type zeolite, ZSM-5 type zeolite, a phosphate group zeolite or the like. Two or more of them may be used together. Among the zeolites, the phosphate zeolite is preferable for attaining a satisfactory NOx conversion efficiency.

The phosphate group zeolite may be a SAPO (silico aluminophosphate) (e.g., SAPO-5, SAPO-11, SAPO-34 or the like), a MeAPO (metal aluminophosphate), a MeAPSO (metallo-aluminosilicophospate) or the like.

Considering the NOx conversion efficiency, it is preferable for the zeolite to include a zeolite being ion-exchanged with Cu (copper) and/or Fe (iron), and more preferably ion-exchanged with Cu.

The zeolite being ion-exchanged with Cu and/or Fe is preferred to have an ion exchange amount from 1.0 to 5.0 mass%.

It is to be noted that the metal ions used in the ion-exchange of the zeolite are not limited to a Cu ions and/or Fe ions. Other transition metal ions enabling improvement of NOx conversion efficiency may be used.

The average particle diameter of the primary or secondary particles of the zeolite is preferred to be 0.5 to 10 $\mu$m, and more preferably 1 to 5 $\mu$m. In a case where the average particle diameter of the primary or secondary particles of the zeolite is less than 0.5 $\mu$m, it becomes difficult for exhaust gas to permeate through the inside of a partition wall 11b such that the zeolite cannot be effectively used for NOx conversion. On the other hand, in a case where the average particle diameter of the primary or secondary particles of the zeolite is more than 10 $\mu$m, the number of pores of the honeycomb unit 11 decreases. Accordingly, it becomes difficult for exhaust gas to permeate through the inside of the partition wall 11b such that the phosphate group zeolite cannot be effectively used for NOx conversion.

The honeycomb unit 11 is preferred to have a zeolite content by weight per apparent volume from 230 to 400 g/L. In a case where the zeolite content by weight per apparent volume is less than 230 g/L, the apparent volume of the honeycomb unit 11 may need to be increased in order to improve the NOx conversion efficiency. On the other hand, in a case where the zeolite content by weight per apparent volume is more than 400 g/L, the strength of the honeycomb unit 11 may become insufficient and the aperture ratio of the honeycomb unit 11 may decrease.

A solid of, for example, alumina sol, silica sol, titania sol, soluble glass, sepiolite, attapulgite, boehmite or the like may be the inorganic binder(s) included in the honeycomb unit 11. Two or more kinds of inorganic binders may be used.

The content as solid content of the inorganic binder of the honeycomb unit 11 is preferably 5 to 30 mass%, and more preferably 10 to 20 mass%. In a case where the content as solid content of the inorganic binder is less than 5 mass%, the strength of the honeycomb unit 11 may decrease. On the other hand, in a case where the content as solid content of the inorganic binder is more than 30 mass%, it becomes difficult to perform extrusion molding of the honeycomb unit 11.

In order to increase the strength of the honeycomb unit 11, it is preferable for the honeycomb unit 11 to further include one or more materials selected from a group of an inorganic fiber, a scale-like material, a tetrapod-shaped material, or a three-dimensional needle-shaped material.

Although the inorganic fiber included in the honeycomb unit 11 is not limited in particular, the inorganic fiber may be alumina fibers, silica fibers, silicon carbide fibers, silica alumina fibers, glass fibers, potassium titanate fibers, aluminum borate fibers or the like. Two or more kinds of inorganic fibers may be used.

The aspect ratio of the inorganic fibers is preferably 2 to 1000, more preferably, 5 to 800, and still more preferably, 10 to 500. In a case where the aspect ratio of the inorganic fibers is less than 2, the effect of increasing the strength of the honeycomb unit 11 is reduced. On the other hand, in a case where the aspect ratio of the inorganic fibers is more than 1000, clogging or the like, for example, may occur in the molding die when performing extrusion molding for forming the honeycomb unit 11. Further, breakage of the inorganic fibers may occur, such that the effect of increasing the strength of the honeycomb unit 11 is reduced.

The scale-like material refers to a planar material. It is preferable for the scale-like material to have a thickness of 0.2 $\mu$m to 5 $\mu$m and a maximum length of 10 $\mu$m to 160 $\mu$m. The ratio of the maximum length of the scale-like material with respect to the thickness of the scale-like material is preferably 3 to 250.

Although the scale-like material included in the honeycomb unit 11 is not limited in particular, the scale-like material included in the honeycomb unit 11 may be glass, muscovite, alumina, silica or the like. Two or more kinds of the scale-like material may be used.

The tetrapod-shaped material refers to a material having a needle-like part extending three-dimensionally. The average length of the needles of the needle-like part is preferably 5 $\mu$m to 30 $\mu$m. The average diameter of the needles of the needle-like part is preferably 0.5 $\mu$m to 5 $\mu$m.

Although the material of the tetrapod-shaped material included in the honeycomb unit 11 is not limited in particular, the material of the tetrapod-shaped material may be zinc oxide or the like. Two or more kinds of the tetrapod-shaped material may be used.

The three-dimensional needle-like material refers to a material including needle-like parts combined to each other by an inorganic compound (e.g., glass) at a center area of the needle-like parts. The average length of the needles of the needle-like parts is preferably 5 $\mu$m to 30 $\mu$m. The average diameter of the needles of the needle-like parts is preferably 0.5 $\mu$m to 5 $\mu$m.

Further, the needle-like parts may be connected three-dimensionally. The diameter of the needle-like parts is preferably 0.1 $\mu$m to 5 $\mu$m, the length of the needle-like parts is preferably 0.3 $\mu$m to 30 $\mu$m, and the ratio of the length of the needle-like parts to the diameter of the needle-like parts is preferably 1.4 to 50.0.

Although the three-dimensional needle-like material included in the honeycomb unit 11 is not limited in particular, the three-dimensional needle-like material may be alumina, silica, silicon carbide, silica alumina, glass, potassium titanate, aluminum borate, boehmite or the like. Two or more kinds of the three-dimensional needle-like material may be used.

The content of one or more kinds selected from a group of the inorganic fiber, the scale-like material, the tetrapod-shaped material, and the three-dimensional needle-like material in the honeycomb unit 11 is preferably 3 mass% to 50 mass%, more preferably, 3 mass% to 30 mass%, and still more preferably, 5 mass% to 20 mass%. In a case where the content of one or more kinds selected from a group of the inorganic fiber, the scale-like material, the tetrapod-shaped material, and the three-dimensional needle-like material in the honeycomb unit 11 is less than 3 mass%, the effect of increasing the strength of the honeycomb unit 11 is reduced. On the other hand, in a case where the content of one or more kinds selected from a group of the inorganic fiber, the scale-like material, the tetrapod-shaped material, and the three-dimensional needle-like material in the honeycomb unit 11 is more than 50 mass%, the content of zeolite in the honeycomb unit 11 may decrease so that the NOx conversion efficiency is reduced.

The porosity of the honeycomb unit 11 is preferably 20% to 50%. In a case where the porosity of the honeycomb unit 11 is less than 20%, it becomes difficult for exhaust gas to permeate into the partition walls 11b. Thus, zeolite cannot be effectively used for NOx conversion. On the other hand, in a case where the porosity of the honeycomb unit 11 is more than 50%, the strength of the honeycomb unit 11 becomes insufficient.

It is to be noted that the porosity of the honeycomb unit 11 can be measured by using a mercury penetration method.

The aperture ratio of the honeycomb unit 11 is preferably 50% to 75%. In a case where the aperture ratio of the honeycomb unit 11 is less than 50%, zeolite cannot be effectively used for NOx. On the other hand, in a case where the aperture ratio of the honeycomb unit 11 is more than 75%, the strength of the honeycomb unit 11 becomes insufficient.

The density of the through-holes 11a of the honeycomb unit 11 is preferably 31 units per cm$^2$ to 155 units per

cm$^2$ In a case where the density of the through-holes 11a of the honeycomb unit 11 is less than 31 units per cm$^2$, it becomes difficult for exhaust gas and the zeolite to make contact. Thus, the NOx conversion efficiency may be reduced. On the other hand, in a case where the density of the through-holes 11a of the honeycomb unit 11 is more than 155 units per cm$^2$, the pressure loss of the honeycomb structural body 10 increases.

The thickness of the partition wall 11b of the honeycomb unit 11 is preferably 0.1 mm to 0.4 mm, and more preferably 0.1 mm to 0.3 mm. In a case where the thickness of the partition wall 11b is less than 0.1 mm, the strength of the honeycomb unit 11 decreases. On the other hand, in a case where the thickness of the partition wall 11b is more than 0.4 mm, it becomes difficult for exhaust gas to permeate into the partition wall 11b. Thus, the zeolite cannot be effectively used for NOx conversion.

The thickness of the outer peripheral coating layer 12 is preferably 0.1 mm to 2.0 mm. In a case where the thickness of the outer peripheral coating layer 12 is less than 0.1 mm, the effect of increasing the strength of the honeycomb structural body 10 becomes insufficient. On the other hand, in a case where the thickness of the outer peripheral coating layer 12 is more than 2.0 mm, the content of the zeolite per volume unit of the honeycomb structural body 1.0 is reduced. Thus, the NOx conversion efficiency is reduced.

Although the shape of the honeycomb structure 10 is cylindrical, the shape of the honeycomb structure 10 is not limited in particular. The shape of the honeycomb structure 10 may be a rectangular pillar, an elliptical pillar, an oval pillar, a round chamfered pillar (e.g., round chamfered triangular pillar) or the like.

The shape of the through-holes 11a is not limited to a square pillar. The shape of the through-holes may be a triangular pillar, a hexagonal pillar or the like.

Next, an example of a method for manufacturing the honeycomb structural body 10 according to an embodiment of the present invention is described. First, a raw cylindrical honeycomb molded body, in which plural through-holes separated by walls are formed in parallel in a longitudinal direction, is manufactured by performing extrusion molding using a raw material paste containing zeolite and an inorganic binder (and according to necessity, one or more kinds selected from a group of the inorganic fiber, the scale-like material, the tetrapod-shaped material, and the three-dimensional needle-like material).

Although the inorganic binder contained in the raw material paste is not limited in particular, the inorganic binder is added as alumina sol, silica sol, titania sol, soluble glass, sepiolite, attapulgite, boehmite and the like. Two or more kinds of inorganic binders may be used.

Further, an organic binder, a dispersion medium, a molding aid, and the like may be arbitrarily added to the raw material paste, if necessary.

Although the organic binder is not limited in particular, the organic binder may be methylcellulose, carboxymethyl cellulose, hydroxylethyl cellulose, polyethyleneglycol, phenol resin, epoxy resin or the like. Two or more kinds of organic binders may be used.

The adding amount of the organic binder is preferably 1 mass% to 10 mass% of the total mass of the one or more kinds selected from a group of the zeolite, the inorganic binder, the inorganic fiber, the scale-like material, the scale-like particles, the tetrapod-shaped material, and the three-dimensional needle-like material.

Although the dispersion medium is not limited in particular, the dispersion medium may be water, an organic solvent such as benzene, alcohol such as methanol, and the like. Two or more kinds of dispersion media may be used.

Although the molding aid is not limited in particular, the molding aid may be ethylene glycol, dextrin, fatty acid, fatty acid soap, polyalcohol or the like. Two or more kinds of molding aids may be used.

When preparing the raw material paste, it is preferable for the raw material paste to be mixed and kneaded. The raw material paste can be mixed by using a mixer, an attritor or the like, and can be kneaded by a kneader or the like.

Then, the raw honeycomb molded body is dried by using a drying apparatus such as a microwave drying apparatus, a hot air drying apparatus, a dielectric drying apparatus, a reduced pressure drying apparatus, a vacuum drying apparatus, and a freeze drying apparatus. Thereby, a dried honeycomb body is obtained.

Further, the dried honeycomb body is degreased. The degreasing conditions can be arbitrarily selected depending on the amount and kind of organic substances contained in the dried honeycomb body. However, the dried honeycomb body is preferably degreased at 400 °C for 2 hours.

Then, by firing the degreased honeycomb body, the honeycomb unit 11 having a cylindrical shape is obtained. The firing temperature is preferably 600 °C to 1200 °C, and more preferably 600 °C to 1000 °C. In a case where the firing temperature is less than 600 °C, the sintering does not progress, such that the strength of the honeycomb unit 11 decreases. On the other hand, in a case where the firing temperature is more than 1200 °C, the sintering excessively progresses such that the reactive sites of the zeolite decreases.

Then, an outer peripheral coating layer paste is applied onto an outer peripheral surface of the cylindrical honeycomb unit 11 except for both end faces of the honeycomb unit 11.

The outer peripheral coating layer paste is not limited in particular. The outer peripheral coating layer paste may be a mixture of an inorganic binder and inorganic particles, a mixture of the inorganic binder and inorganic fibers, a mixture of the inorganic binder, the inorganic particles, and the inorganic fibers or the like.

Although the inorganic binder included in the outer peripheral coating layer paste is not limited in particular, the inorganic binder is added as silica sol, alumina sol, or the like. Two or more kinds of inorganic binders may be used. Among the inorganic binders, it is preferable to add silica sol.

Although the material constituting the inorganic particles of the outer peripheral coating layer paste is not limited in particular, the material may be, for example, a carbide (e.g., silicon carbide), a nitride (e.g., silicon nitride, boron nitride) or the like. Two or more kinds of the inorganic particles may be used. Among the inorganic particles, silicon carbide is preferable because silicon carbide has satisfactory thermal conductivity. Although the material constituting the inorganic fibers of the outer peripheral coating layer paste is not limited in particular, the inorganic fibers may be silica alumina fibers, mullite fibers, alumina fibers, silica fibers or the like. Two or more kinds of the inorganic fibers may be used. Among the inorganic fibers, alumina fibers are preferable.

The outer peripheral coating layer paste may further include an organic binder.

Although the organic binder included in the outer peripheral coating layer paste is not limited in particular, the organic binder may be polyvinyl alcohol, methylcellulose, ethylcellulose, carboxymethylcellulose or the like. Two or more kinds of the organic binders may be used.

The outer peripheral coating layer paste may further include, for example, balloons (i.e. minute hollow balls of oxide-based ceramic), a pore-forming agent or the like.

Although the balloon included in the outer peripheral coating layer paste is not limited in particular, the balloon may be an alumina balloon, a glass micro balloon, a shirasu-balloon, a fly ash balloon, a mullite balloon or the like. Two or more kinds of the balloons may be used. Among the balloons, alumina balloons are preferable.

Although the pore-forming agent included in the outer peripheral coating layer paste is not limited in particular, the pore-forming agent may be spherical acryl particles, graphite or the like. Two or more kinds of the pore-forming agents may be used.

Then, the honeycomb unit 11 being coated with the outer peripheral coating layer paste is solidified by drying. Thereby, a cylindrical shaped honeycomb structural body 10 is obtained. In a case where the outer peripheral coating layer paste of the honeycomb structural body 10 contains an organic binder, a degreasing process is preferably performed on the honeycomb structural body 10. The degreasing conditions can be arbitrarily selected depending on the amount and kind of organic substances. However, the degreasing conditions are preferably at 700 °C for 20 minutes.

It is to be noted that zeolite may be ion exchanged by having the honeycomb unit 11 steeped into a solution containing copper ions and/or iron ions. Further, a raw material paste containing zeolite being ion exchanged by copper ions and/or iron ions may be used as the raw material paste.

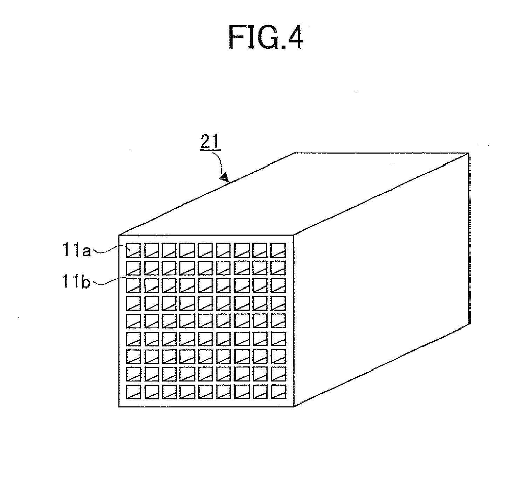

A honeycomb structural body 20 is illustrated as other example of the SCR catalyst 131 in Fig. 3. The honeycomb structural body 20 has the same configuration as the configuration of the honeycomb structural body 10 except that the honeycomb structural body 20 has plural honeycomb units 21 adhered thereto by interposing an adhesive layer 22. Each of the plural honeycomb units 21 includes plural through-holes 11a divided by partition walls 11b and arranged in a longitudinal direction thereof (see Fig. 4).

The cross section of the honeycomb unit 21 perpendicular to the longitudinal direction of the honeycomb unit 21 preferably has an area of 10 cm$^2$ to 200 cm$^2$. In a case where the area of the cross section of the honeycomb unit 21 perpendicular to the longitudinal direction of the honeycomb unit is less than 10 cm$^2$, the pressure loss of the honeycomb structural body 20 increases. On the other hand, in a case where the area of the cross section of the honeycomb unit 21 perpendicular to the longitudinal direction of the honeycomb unit 21 is more than 200 cm$^2$, the strength against thermal stress of the honeycomb unit 21 becomes insufficient.

Other than the cross section of the honeycomb unit 21 perpendicular to the longitudinal direction of the honeycomb unit 21, the honeycomb unit 21 is the same as the honeycomb unit 11.

The thickness of the adhesive layer 22 is preferably 0.5 mm to 2.0 mm. In a case where the thickness of the adhesive layer 22 is less than 0.5 mm, the adhesive strength among the honeycomb units 21 becomes insufficient. On the other hand, in a case where the thickness of the adhesive layer 22 is more than 2.0 mm, the pressure loss of the honeycomb structural body 20 increases.

Next, an example of a method for manufacturing the honeycomb structural body 20 according to an embodiment of the present invention is described. First, in the same manner as the honeycomb structural body 10, honeycomb units 21 having square pillar shapes are formed. Then, an adhesive layer paste is applied to the outer peripheral surface of the honeycomb units 21 except for both end faces of the honeycomb units 21. Then, the honeycomb units 21 are sequentially adhered together and solidified by drying. Thereby, an aggregate of the honeycomb units 21 can be obtained.

The adhesive layer paste is not limited in particular. The adhesive layer paste may be a mixture of an inorganic binder and inorganic particles, a mixture of the inorganic binder and inorganic fibers, a mixture of the inorganic binder, the inorganic particles, and the inorganic fibers or the like.

Although the inorganic binder included in the adhesive layer paste is not limited in particular, the inorganic binder is added as silica sol, alumina sol, or the like. Two or more kinds of inorganic binders may be used. Among the inorganic binders, it is preferable to add silica sol.

Although the material constituting the inorganic particles of the adhesive layer paste is not limited in particular, the material may be, for example, a carbide (e.g., silicon carbide), a nitride (e.g., silicon nitride, boron nitride) or the like. Two or more kinds of the inorganic particles may be used. Among the inorganic particles, silicon carbide is preferable because silicon carbide has satisfactory thermal conductivity.

Although the material constituting the inorganic fibers of the adhesive layer paste is not limited in particular, the inorganic fibers may be silica alumina fibers, mullite fibers, alumina fibers, silica fibers or the like. Two or more kinds of the inorganic fibers may be used. Among the inorganic fibers, alumina fibers are preferable.

The adhesive layer paste may further include an organic binder.

Although the organic binder included in the adhesive layer paste is not limited in particular, the organic binder may be polyvinyl alcohol, methylcellulose, ethylcellulose, carboxymethylcellulose or the like. Two or more kinds of the organic binders may be used.

The adhesive layer paste may further include, for example, balloons (i.e. minute hollow balls of oxide-based ceramic), a pore-forming agent or the like.

Although the balloon included in the adhesive layer paste is not limited in particular, the balloon may be an alumina balloon, a glass micro balloon, a shirasu-balloon, a fly ash balloon, a mullite balloon or the like. Two or more kinds of the balloons may be used. Among the balloons, alumina balloons are preferable.

Although the pore-forming agent included in the adhesive layer paste is not limited in particular, the pore-forming agent may be spherical acryl particles, graphite or the like. Two or more kinds of the pore-forming agents may be used.

Then, by cutting the aggregate of honeycomb units 21 into a cylindrical shape (and polishing the aggregate of honeycomb units 21 according to necessity), a cylindrical-shaped aggregate of honeycomb units 21 can be obtained.

Alternatively, instead of cutting the aggregate of honeycomb units 21 into a cylindrical shape, the cylindrical shaped aggregate of honeycomb units 21 may be obtained by adhering together honeycomb units 21 each of which having a cross-section perpendicular to the longitudinal direction of the honeycomb unit 21 that is molded into a predetermined shape. In this case, the predetermined shape of the cross-section perpendicular to the longitudinal direction of the honeycomb unit 21 is preferred to be a fan-shape having a central angle of 90°.

Then, an outer peripheral coating layer paste is applied to the outer peripheral surface of the cylindrical-shaped aggregate of honeycomb units 21 except for both end faces of the honeycomb units 21.

The outer peripheral coating layer paste may be, for example, the same as or different from the material of the adhesive layer paste.

Then, the aggregate of the honeycomb units 21 being coated with the outer peripheral coating layer paste is solidified by drying. Thereby, a cylindrical shaped honeycomb structural body 20 is obtained. In a case where the adhesive layer paste and/or the outer peripheral coating layer paste of the honeycomb structural body 20 contains an organic binder, a degreasing process is preferably performed on the honeycomb structural body 20. The degreasing conditions can be arbitrarily selected depending on the amount and kind of organic substances. However, the degreasing conditions are preferably at 700 °C for 20 minutes.

It is to be noted that the honeycomb structural bodies 10 and 20 may be formed without the outer peripheral coating layer 12.

Alternatively, other honeycomb structural body including a honeycomb unit(s) other than the honeycomb unit 11 or the honeycomb unit 21 may be used. The honeycomb unit of the other honeycomb structural body supports zeolite and has plural through-holes divided by partition walls and arranged in a longitudinal direction thereof.

Although the material constituting the honeycomb unit supporting zeolite is not limited in particular, the material may be cordierite or the like.

Although the zeolite supported on the honeycomb unit 11 is not limited in particular, the zeolite may be β type zeolite, ZSM-5 type zeolite, a phosphate group zeolite or the like. Two or more of them may be used together. Among the zeolites, the phosphate zeolite is preferable for attaining a satisfactory NOx conversion efficiency.

The phosphate group zeolite may be a SAPO (silico aluminphosphate) (e.g., SAPO-5, SAPO-11, SAPO-34 or the like), a MeAPO (metal aluminophosphate), a MeAPSO (metallo-aluminosilicophospate) or the like.

Considering the NOx conversion efficiency, it is preferable for the zeolite to include a zeolite ion-exchanged with Cu and/or Fe, and more preferably ion-exchanged with Cu.

The zeolite ion-exchanged with Cu and/or Fe is preferred to have an ion exchange amount from 1.0 to 5.0 mass%.

It is to be noted that the metal ions used in the ion-exchange of the zeolite are not limited to Cu ions and/or Fe ions. Other transition metal ions enabling improvement of NOx conversion efficiency may be used.

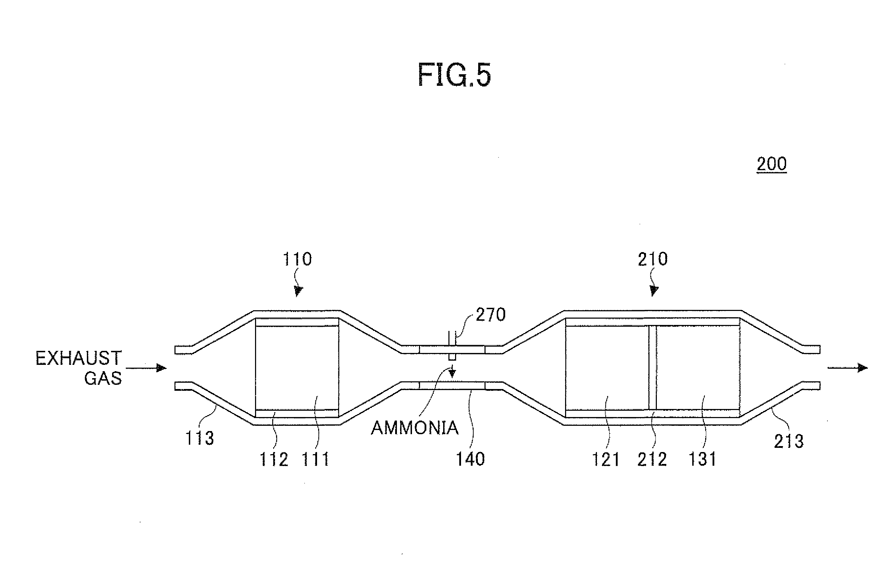

Fig. 5 illustrates an exhaust gas conversion system 200 which is another example of the exhaust gas conversion system 100 according to an embodiment of the present invention. Except for using an exhaust gas conversion apparatus 210 instead of the exhaust gas conversion apparatuses 120, 130, the configuration of the exhaust gas conversion system 200 is the same as the configuration of the exhaust gas conversion system 100. In this modified example, the exhaust gas conversion apparatus 210 can be manufactured by installing (e.g., canning) the exhaust gas conversion apparatus 210 in a metal container (shell) 113 in a state where a holding sealing member 212 is provided at an outer peripheral part of the DPF 121 and the SCR catalyst 131. Thereby, the exhaust gas conversion system 200 can convert the exhaust gas of a diesel engine.

Further, the exhaust gas conversion system 200 has an ammonia supply part 270 inside the pipe 140 provided between the exhaust gas conversion apparatus 110 and the exhaust gas conversion apparatus 210. The ammmonia supply part 270 is, for example, an injection nozzle for injecting ammonia or a compound that generates ammonia by being decomposed. By supplying ammonia into the pipe 140 with the ammonia supply part, the SCR catalyst 131 reduces NOx contained in an exhaust gas.

Compared to the space required for positioning the exhaust gas conversion apparatuses 120, 130 of the conversion system 100, the space required for positioning the exhaust gas conversion apparatuses 210 of the exhaust gas conversion system 200 can be reduced.

It is to be noted that an exhaust gas conversion method according to an embodiment of the present invention is a method that is performed by using the above-described embodiment of the exhaust gas conversion apparatus. Therefore, specific details of the exhaust gas conversion method according to the embodiment of the present invention are omitted.

Examples

In the following examples, "parts" refers to "parts by mass".

[DOC-1]

A commercially available cordierite honeycomb structural body that supports an oxide catalyst was used. The honeycomb structural body has a diameter of 228.6 mm and a length of 114.3 mm. The honeycomb structural body has a cylindrical shape.

[DPF-1]

A raw material paste was prepared by performing the following processes: mixing an $\alpha$ type silicon carbide (60 parts) having an average particle diameter of 11 $\mu$m and an $\alpha$ type silicon carbide (40 parts) having an average particle diameter of 0.5 $\mu$ m; then, adding carboxyl methylcellulose (5 parts) and water (10 parts) to the mixture of the $\alpha$ type silicon carbides; then, mixing and kneading the added carboxyl methylcellulose and water with the mixture of the $\alpha$ type silicon carbides; then, adding a small amount of glycerin and a lubricant UNILUB (Trademark) (manufactured by Nippon Oil & Fats Co. Ltd.) to the mixture of the $\alpha$ type silicon carbides, carboxyl methylcellulose, and water; and then, mixing and kneading the added glycerin and lubricant with the mixture of the $\alpha$ type silicon carbides, carboxyl methylcellulose, and water.

Then, extrusion molding was performed on the raw material paste by using an extruder. Thereby, a cylindrical-shaped honeycomb molded body was manufactured. Then, the honeycomb molded body was dried by using a microwave drying apparatus and a hot air drying apparatus. Thereby, a dried honeycomb body was manufactured.

Then, the through-holes of one side of the dried honeycomb body were filled with the raw material paste. Then, the dried honeycomb body filled with the raw material paste was further dried by the microwave drying apparatus and the hot air drying apparatus. After the drying, the dried honeycomb body was degreased. Then, the degreased honeycomb body was fired at 2200 °C for 3 hours. Thereby, a honeycomb unit is manufactured having a quadrate pillar-shape whose single side is 34.3 mm and length is 203.2 mm. In the honeycomb unit, the density of the through holes was 46.5 units/cm$^2$, the thickness of the partition walls was 0.15 mm, the average pore diameter of the honeycomb unit was 11 $\mu$ m, and the porosity of the honeycomb unit was 42%.

Then, an adhesive layer paste was prepared by mixing and kneading an alumina fiber (30 parts) having an average fiber diameter of 20 $\mu$m, a silicon carbide (21 parts) having an average particle diameter of 0.6 $\mu$m, silica sol (15 parts) of 30 mass% as solid content, carboxyl methylcellulose (5.6 parts), and water (28.4 parts).

Then, 36 honeycomb units were adhered together by applying the adhesive layer paste to the outer peripheral surface of the honeycomb units except for the outer peripheral surface of both end parts of the honeycomb units. The adhesive layer paste was applied so that the thickness of the adhesive layer is 1.0 mm. The adhesive layer paste was solidified by drying at a temperature of 120 °C. Then, an aggregate of the honeycomb units was manufactured by cutting the honeycomb units into a cylindrical shape with a diamond cutter so that the cross section perpendicular to the longitudinal direction of the honeycomb units becomes substantially point symmetrical.

Then, an outer peripheral surface coating layer paste was prepared by mixing and kneading an silica-alumina fiber (23.3 parts) having an average fiber diameter of 50 $\mu$m, a silicon carbide (30.2 parts) having an average particle diameter of 0.3 $\mu$m, silica sol (7 parts) of 30 mass% as solid content, carboxyl methylcellulose (0.5 parts), and water (39 parts).

Then, the outer peripheral surface coating layer paste was applied to the outer peripheral surface of the aggregate of the honeycomb units except for the outer peripheral surface of both end parts of the aggregate of honeycomb units. The outer peripheral surface coating layer paste was solidified by drying the outer peripheral surface coating layer paste at 120 °C. Thereby, a honeycomb structural body having a cylindrical shape with a diameter of 228.6 mm and a height of 203.2 mm was manufactured.

[DPF-2]

A commercially available cordierite honeycomb structural body having a single honeycomb unit was used. With this honeycomb structural body, the through-holes on one end of the honeycomb unit of the honeycomb structural body are sealed. The honeycomb structural body has a diameter of 228.6 mm and a length of 279.4 mm. The honeycomb structural body has a cylindrical shape. An outer peripheral coating layer having a thickness of 0.2 mm was formed on the outer peripheral surface of the honeycomb unit except for the outer peripheral surface of both end parts of the honeycomb unit. In the honeycomb unit, the density of the through holes was 46.5 units/cm$^2$, the thickness of the partition walls was 0.30 mm, the average pore diameter of the honeycomb unit was 15 $\mu$ m, and the porosity of the honeycomb unit was 48%. The honeycomb unit does not have catalyst supported thereon.

[SCR catalyst-1]

A raw material paste was prepared by mixing and kneading: SAPO (3100 g) having an average particle diameter of 3 $\mu$m as zeolite; boehmite (895 g); alumina fiber (485 g) having an average fiber diameter of 6 $\mu$m and an average fiber length of 100 $\mu$m; methylcellulose (380 g); oleic acid (280 g); and ion exchanged water (2425 g).

Then, extrusion molding was performed on the raw material paste by using an extruder. Thereby, a cylindrical -shaped honeycomb molded body was manufactured. Then, the honeycomb molded body was dried for 10 minutes at 110 °C by using a microwave drying apparatus and a hot air drying apparatus. Then, the dried honeycomb body was degreased at 400 °C for 5 hours. Then, the degreased honeycomb body was fired at 700 °C for 2 hours. Thereby, a honeycomb unit was manufactured.

Then, the above-described outer peripheral coating layer paste was applied to the outer peripheral surface of the fired honeycomb body except for the outer peripheral surface of both end parts of the fired honeycomb body. The outer peripheral coating layer paste was applied so that the thickness of the outer peripheral coating layer is 0.2 mm. The outer peripheral coating layer paste was solidified by drying at a temperature of 120 °C. Thereby, a honeycomb structural body was manufactured. Further, zeolite (SAPO) of the honeycomb structural body was ion exchanged with copper ions by steeping the honeycomb structural body into a copper nitrate solution. Thereby, the honeycomb structural body 10 was manufactured. In measuring the exchange amount of copper ions of the zeolite (SAPO) by performing ICP (Inductively Coupled Plasma) analysis with an ICPS-8100 (manufactured by Shimadzu Corp.), 2.7 mass% was measured. The honeycomb structural body 10 has a cylindrical shape with a diameter of 228.6 mm and a length of 203.2 mm. In the honeycomb unit 11 of the honeycomb structural body 10, the thickness of the partition walls was 0.28 mm and the density of the through holes was 62 units/cm$^2$.

[SCR catalyst-2]

A commercially available cordierite honeycomb structural body was steeped in a dispersion of zeolite (SAPO) being ion exchanged with copper ions of 2.7 mass%. Thereby, zeolite (SAPO) of 70 g/L was supported on the honeycomb structural body. The honeycomb structural body includes a single honeycomb unit. The honeycomb structural body has a cylindrical shape with a diameter of 228.6 mm and a length of 304.8 mm. An outer peripheral coating layer having a thickness of 0.2 mm is formed on the outer peripheral surface of the honeycomb unit except for the outer peripheral surface of both end parts of the honeycomb unit. In the honeycomb unit of the honeycomb structural body, the thickness of the partition walls was 0.28 mm and the density of the through holes was 62 units/cm$^2$.

[Example 1]

The DOC-1, the DPF-1, and the SCR catalyst-1 were used as the DOC 111, the DPF 121, and the SCR catalyst 131, respectively. The exhaust gas conversion system 200 (see Fig. 5) was manufactured by arranging the DOC 111, the DPF 121, and the SCR catalyst 131 in a manner that the distance between the DOC 111 and the DPF 121 is 800 mm and the distance between the DPF 121 and the SCR catalyst 131 is 30 mm. In this example, an ejection nozzle for ejecting urea water into the pipe 140 was set at a position in which the distance from the DPF 121 is 600 mm.

[Example 2]

Except for using the DPF-2 as the DPF 121, the exhaust gas conversion system 100 was manufactured under the same conditions as those of Example 1.

[Example 3]

Except for using the SCR catalyst-2 as the SCR catalyst 131, the exhaust gas conversion system 100 was manufactured under the same conditions as those of Example 1.

[Example 4]

Except for using the DPF-2 and the SCR catalyst-2 as the DPF 121 and the SCR catalyst 131, respectively, the exhaust gas conversion system 100 was manufactured under the same conditions as those of Example 1.

[Example 5]

The DOC-1, the DPF-1, and the SCR catalyst-1 were used as the DOC 111, the DPF 121, and the SCR catalyst 131, respectively. The exhaust gas conversion system 100 (see Fig. 1) was manufactured by arranging the DOC 111, the DPF 121, and the SCR catalyst 131 in a manner that the distance between the DOC 111 and the DPF 121 is 800 mm and the distance between the DPF 121 and the SCR catalyst 131 is 200 mm. In this example, an ejection nozzle for ejecting urea water into the pipe 140 was set at a position in which the distance from the DPF 121 is 600 mm.

[Comparative Example 1]

Except for changing the length between the pipe 140 and the pipe 150 in a manner that the distance between the DOC 111 and the DPF 121 is 200 mm and the distance between the DPF 121 and the SCR catalyst 131 is 800 mm and setting an ejection nozzle for ejecting urea water into the pipe 150 at a position in which the distance from the SCR catalyst 131 is 600 mm, an exhaust gas conversion system was manufactured under the same conditions as those of Example 5.

[Comparative Example 2]

Except for changing the length of the pipe 150 in a manner that the distance between the DPF 121 and the SCR catalyst 131 is 1300 mm and setting an ejection nozzle for ejecting urea water into the pipe 150 at a position in which the distance from the SCR catalyst 131 is 1100 mm, an exhaust gas conversion system was manufactured under the same conditions as those of Comparative Example 1.

[Measurement of NOx conversion rate]

The conversion rate of NOx contained in an exhaust gas emitted from an engine having an air volume displacement of 4.2 L was measured by using the exhaust gas conversion systems of Examples 1 to 5 and Comparative Examples 1 and 2.

It is to be noted that the NOx conversion rate was measured by setting NOx sensors on the upstream and downstream sides of the SCR catalyst 131 with respect to the direction in which the exhaust gas flows, detecting the concentration of NOx inside the exhaust gas with the NOx sensors for 30 minutes, and obtaining the average value with the following formula.

$$\text{NOx conversion rate} = (\text{NOx inflow} - \text{Nox outflow})/(\text{NOx inflow}) \times 100\%$$

The measurement of the NOx conversion rate was performed under the conditions where the engine is in a steady operation state and the exhaust gas has a temperature of 250 °C. Further, urea water was ejected inside the pipe 140 or the pipe 150 from an ejection nozzle so that the mol ratio of ammonia with respect to NOx detected by the NOx sensor of the upstream side of the SCR catalyst 131 becomes 1 when the temperature of the SCR catalyst 131 is equal to or more than 180 °C. Further, the urea water is diffused in the radial direction of the pipe 150 by using a mixer and a swirler.

The lengths of the exhaust gas conversion systems and the results of the NOx conversion rate measurement are illustrated in Table 1 together with various kinds of DOC, DPF, and SCR catalyst.

[Table 1]

|  | DOC | DPF | SCR CATALYST | LENGTH OF EXHAUST GAS CONVERSION SYSTEM [mm] | CONVERSION RATE OF NOx [%] |
|---|---|---|---|---|---|
| EXAMPLE 1 | DOC-1 | DPF-1 | SCR CATALYST-1 | 1351 | 85 |
| EXAMPLE 2 | DOC-1 | DPF-2 | SCR CATALYST-1 | 1427 | 83 |
| EXAMPLE 3 | DOC-1 | DPF-1 | SCR CATALYST-2 | 1452 | 78 |
| EXAMPLE 4 | DOC-1 | DPF-2 | SCR CATALYST-2 | 1529 | 72 |
| EXAMPLE 5 | DOC-1 | DPF-1 | SCR CATALYST-1 | 1521 | 80 |
| COMPARATIVE EXAMPLE 1 | DOC-1 | DPF-1 | SCR CATALYST-1 | 1521 | 47 |
| COMPARATIVE EXAMPLE 2 | DOC-1 | DPF-1 | SCR CATALYST-1 | 2021 | 83 |

The length of the exhaust gas conversion system of Examples 1 to 5 and Comparative Examples 1 and 2 was 1351 mm, 1427 mm, 1452 mm, 1529 mm, 1521 mm, 1521 mm, and 2021 mm, respectively. The NOx conversion rate of Examples 1 to 5 and Comparative Examples 1 and 2 was 85%, 83%, 78%, 72%, 80%, 47%, and 83%, respectively.

It is to be noted that "length of exhaust gas conversion system" indicates the distance from an end part on an upstream side of the DOC 111 to an end part on a downstream side of the SCR catalyst 131 with respect to the direction in which the exhaust gas flows.

As illustrated in Table 1, it can be understood that the exhaust gas conversion systems 200 of Examples 1-4 and the exhaust gas conversion system 100 of Example 5 can be formed with a length of 1351 mm to 1529 mm while maintaining a NOx conversion rate of 72% to 85%. Further, the exhaust gas conversion system 200 of Example 1 has a NOx conversion rate that is 5% higher and a length that is 170 mm shorter compared to the exhaust gas conversion system 100 of Example 5 which has the same DOC 111, DPF 121, and SCR catalyst 131 as those of the exhaust gas conversion system 200 of Example 1.

On the other hand, although the exhaust gas conversion system of Comparative Example 1 has the same length and the same DOC 111, DPF 121, and SCR catalyst 131 as those of the exhaust gas conversion system 100 of Example 5, the NOx conversion rate is reduced to 47%.

Further, although the exhaust gas conversion system of Comparative Example 2, which has the same DOC 111, DPF 121, and SCR catalyst 131 as those of the exhaust gas conversion system 100 of Example 5, has an NOx conversion rate that is the same (Comparative Example 2 is 83%, Example 5 is 80%) as that of the exhaust gas conversion system 100 of Example 5, the length of the exhaust gas conversion system is increased to 2021 mm.

EXPLANATION OF REFERNECE NUMERALS

10, 20    honeycomb structural body

11, 21    honeycomb unit

11a    through hole

11b    partition wall

12    outer peripheral coating layer

22    adhesive layer

100, 200      exhaust gas conversion system

110, 120,     130, 210 exhaust gas conversion apparatus

111           DOC

112, 122,     132, 212 holding sealing member

113, 123,     133, 213 metal container

121           DPF

131           SCR catalyst

140, 150      pipe


**Claims**

1. An exhaust gas conversion system **characterized by** comprising:

   an oxide catalyst, a filter, and a SCR (Selective Catalytic Reduction) catalyst that are sequentially arranged in a direction in which an exhaust gas flows in an exhaust path of a diesel engine; and
   a part positioned between the oxide catalyst and the filter and configured to supply ammonia.

2. The exhaust gas conversion system as claimed in claim 1, **characterized in that** the filter is a honeycomb structural body including a honeycomb unit having a plurality of through holes divided by partition walls and arranged in a longitudinal direction thereof,
   wherein the plural through holes are sealed on one end of the honeycomb unit.

3. The exhaust gas conversion system as claimed in claim 2, **characterized in that** the honeycomb unit does not support a catalyst.

4. The exhaust gas conversion system as claimed in claim 2 or 3, **characterized in that** the honeycomb unit includes silicon carbide or silicon carbide bonded silicon.

5. The exhaust gas conversion system as claimed in any one of claims 2 to 4, **characterized in that** the partition walls of the honeycomb unit have a thickness of 0.10 mm or more and 0.18 mm or less.

6. The exhaust gas conversion system as claimed in any one of claims 1 to 5, **characterized in that** the SCR catalyst is a honeycomb structural body including a honeycomb unit having a plurality of through holes divided by partition walls and arranged in a longitudinal direction thereof,
   wherein the honeycomb unit includes zeolite and an inorganic binder.

7. The exhaust gas conversion system as claimed in claim 6, **characterized in that** the honeycomb unit includes one or more materials selected from a group of an inorganic fiber, a scale-like material, a tetrapod-shaped material, or a three-dimensional needle-shaped material.

8. The exhaust gas conversion system as claimed in claim 6 or 7, **characterized in that** the zeolite includes a phosphate group zeolite.

9. The exhaust gas conversion system as claimed in any one of claims 1 to 8, **characterized in that** the filter and the SCR catalyst are installed in a metal container.

10. A method for converting exhaust gas **characterized by** comprising a step of:

    converting the exhaust gas by using the exhaust gas conversion system claimed in any one of claims 1 to 9.

# FIG.1

EP 2 505 802 A2

# FIG.2

10

12

11b  11a  11

# FIG.3

20

12

22

21

# FIG.4

# FIG.5

EP 2 505 802 A2

**EP 2 505 802 A2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000303826 A